# EUROPÄISCHE PATENTANMELDUNG

(11) **EP 2 192 419 A2**
(43) Veröffentlichungstag der Anmeldung: **02.06.2010**
(21) Anmeldenummer: 09173114.1
(22) Anmeldetag: 15.10.2009
(51) Int. Cl.: G01S 7/292, G01S 7/487, G01S 7/527, G01S 13/10, G01S 15/10, G01S 17/10

(54) **Verfahren zur dynamischen Ermittlung des Rauschlevels**

(30) Priorität: 26.11.2008 DE 102008044088
(71) Anmelder: Robert Bosch GmbH, 70442 Stuttgart (DE)
(72) Erfinder: Frank, Michael, 75015 Bretten (DE); Lee, Wei-Chia, 71229 Leonberg (DE); Herder, Bjoern, 70469 Stuttgart (DE)

(57) **Zusammenfassung**

Die Erfindung betrifft ein Verfahren zur dynamischen Anpassung eines Schwellwertes (9) am Signaleingang einer Detektionseinrichtung, insbesondere eines Sensors zur Abstandsmessung mittels eines Echoverfahrens, wobei innerhalb eines Messzyklus ein Sendesignal (1) von einem Objekt reflektiert und in Form eines Echosignals (5,6) zur Detektionseinrichtung gesandt wird, wobei der zeitliche Abstand zwischen dem Senden des Sendesignals (1) und dem Empfang des Echosignals (5,6) gemessen und daraus der Abstand zum Objekt bestimmt wird, wobei ein Schwellwert (9) für einen Empfang des Echosignals in Abhängigkeit von Messungen am Rauschuntergrund angepasst wird, wobei innerhalb eines ersten Messzyklus ein Zeitintervall (3) definiert wird, zu definierten Zeitpunkten innerhalb des Zeitintervalls (3) die Höhe der jeweils am Signaleingang anliegenden Signale registriert wird, innerhalb des Zeitintervalls (3) eine Einhüllende (7) bezüglich der am Signaleingang anliegenden Messwerte und deren zeitliche Ableitung (8) gebildet werden, die Höhe der zeitlichen Ableitung (8) an den definierten Zeitpunkten registriert wird, diejenigen Messwerte der Signalhöhe ermittelt werden, bei denen die zeitliche Ableitung der Einhüllenden (8) null ist oder zumindest einen vorgegebenen Grenzwert unterschreitet und aus diesen Messwerten ein Schwellwert (9) berechnet wird.

## Beschreibung

Die Erfindung betrifft ein Verfahren nach dem Oberbegriff des Anspruch 1 zur dynamischen Anpassung des Schwellwertes am Signaleingang eines Sensors zur Abstandsmessung mittels eines insbesondere ultraschallbasierten Echoverfahrens. Die Erfindung betrifft zudem einen Sensor, insbesondere einen Ultraschallsensor, als Teil eines Fahrerassistenzsystems zur Umsetzung des Verfahrens.

### Stand der Technik

Derartige Fahrerassistenzsysteme zur Erfassung des Umfeldes nutzen zur Abstandsmessung ein Puls - Echo Verfahren, bei dem innerhalb eines Messzyklus ein Sendesignal ausgesandt und von einem Objekt reflektiert wird. Das Echosignal gelangt in eine Detektionseinrichtung, wo aus dem zeitlichen Abstand zwischen dem Senden des Sendesignals und dem Empfang des Echosignals der Abstand zum Objekt bestimmt wird. Diese Messungen führen zu Daten, die als Grundlage in Systemen zur Einparkunterstützung, zur Erkennung toter Winkel, zur Schätzung des Fahrschlauches in engen Strassen, zur Erkennung einer drohenden Kollision und/oder zur Längsregelung dienen.

Um aus der Laufzeit der Signale einen eindeutigen Abstand ableiten zu können, arbeiten die Systeme in einem Eindeutigkeitsbereich. Das bedeutet, dass sich die Länge der Messzyklen nach der maximal zu erwartenden Schalllaufzeit eines Sendepulses bestimmt. Um eine Messreichweite von 5 m zu realisieren ist bei einer Schallgeschwindigkeit von 343 m/s ein Messzyklus von etwa 30 ms einzuhalten. Naturgegebenermaßen ist bei den Messungen das Rauschen zu berücksichtigen. So werden zur Korrektur der Messungen Schwellwerte oder Schwellwertkennlinien vorgegeben, die oberhalb des Rauschlevels liegen. Hochfrequente Störungen, die diese Schwellen überschreiten, können mit Frequenzfiltern unterdrückt werden. Aus der DE 19645339 A1 ist beispielsweise ein Verfahren zur Abstandsmessung bekannt, bei dem eine statische Schwellwertkennlinie durch eine Anzahl von Schwellwert-Stützstellen definiert wird. Bei der Messung wird die Amplitude des empfangenen Signals mittels eines Komparators mit dem Schwellwert verglichen. Erst wenn die Amplitude den Schwellwert übersteigt, meldet der Sensor das Empfangssignal an eine Auswerteeinheit.

Mittels der Schwellwerte kann auch die Charakteristik der Systeme eingestellt werden. So wird durch hohe Schwellwerte zwar Störquellen effektiv unterdrückt, jedoch gehen hohe Schwellwerte auf Kosten der Empfindlichkeit und der Reichweite der Systeme. Daher kann durch Vorgabe niedriger, möglichst nahe an der Rauschgrenze liegender Schwellwerte eine hohe Sensitivität der Sensoren und eine große Reichweite gewährleistet werden, da am Ende des Messzyklus auch kleinamplitudige Echos gemessen werden können. Bei niedrigen Schwellwerten werden Störquellen jedoch nur mitunter unzureichend unterdrückt.

Um große Abstände einbeziehen zu können, wird daher vorteilhafterweise eine möglichst an den Rauschlevel angepasste Schwellwertkennlinie vorgegeben. Dabei ist für die Bestimmung des Rauschlevels eine Unterscheidung zwischen einem Nutzsignal, also einem reflektierten Echo, und dem Rauschen notwendig. Um das Rauschen zu charakterisieren, bestimmen bekannte Verfahren beispielsweise eine Einhüllende durch Demodulation des Signals und nutzen die daraus abzuleitenden Parameter für weitere Verarbeitungsschritte.

Zudem ist zu beachten, dass für die Höhe des Rauschlevels das dynamische Umfeld, in dem die Sensoren arbeiten, eine Rolle spielt. So hängen die Amplituden der reflektierten Echos insbesondere von der Lufttemperatur und der Feuchtigkeit ab. Auch werden die Sensoren beispielsweise bei Regen durch Gischt, durch Nebel, durch Rollgeräusche und durch Luftströmungen bei höheren Geschwindigkeiten gestört. Diese Störungen erzeugen nicht existierende aber vom Sensor wahrgenommene "Geisterobjekte", die als Objekte erkannt werden und zum Fehlverhalten des Systems führen. Um diese Art von Störungen auszublenden, muss eine dynamische Anpassung der Schwelle an die jeweilige Rauschsituation vorgenommen werden.

Aus DE 10 2004 006 015 A1 ist ein Verfahren zur Bestimmung und Regelung einer adaptiven Schwelle beschrieben, wobei am Ende des Messzyklus eine Störpegelprobe entnommen und daraus der Schwellwert bestimmt wird. Offenbarung der Erfindung

### Vorteile der Erfindung

Die Aufgabe der Erfindung besteht nun darin, ein Verfahren zur dynamischen Anpassung des Schwellwertes vorzuschlagen, das sich mit geringem konstruktiven Aufwand und entsprechend geringen Kosten umsetzen lässt und mit dem bei großer Dynamik eine hohe Sensitivität des Sensors und damit eine möglichst große Reichweite erzielt wird. Die Aufgabe der Erfindung ist auch einen Ultraschallsensor zur Umsetzung des Verfahrens zu schaffen.

Diese Aufgabe wird durch das Verfahren mit den kennzeichnenden Merkmalen des Anspruch 1 und den Ultraschallsensor mit den kennzeichnenden Merkmalen des Anspruchs 9 gelöst. In den jeweiligen Unteransprüchen sind vorteilhafte Ausführungsformen genannt.

Das erfindungsgemäße Verfahren bedient sich zunächst einiger Messwerte, die innerhalb eines im Messzyklus definierten Zeitintervalls aufgenommen werden. Diese Messwerte können eine Momentaufnahme des Rauschens repräsentieren oder innerhalb eines Echosignals liegen. Dabei ist das Rauschen der Signalpegel, auf dem kein Echo von dem Sendepuls moduliert ist. Dieser wird vorzugsweise im Messintervall (zwischen 5 bis 35 ms) durch die Einstellung der Komparatorschwelle (Sensorkennlinie) unterdrückt. Der erfindungswesentliche Gedanke liegt nun darin, die Messwerte, die im Echosignal liegen, heraus zu filtern, um anhand der tatsächlich im Rauschen gemessenen Werte den Rauschlevel zu bestimmen und einen Schwellwert entsprechender Höhe festzulegen. Der errechnete Rauschlevel bestimmt damit den Schwellwert für den Komparator. Dieser Schwellwert, wenn er besonders frühzeitig innerhalb des Messzyklus bestimmt wurde, kann noch für diesen Messzyklus genutzt werden. Im Allgemeinen wird er jedoch als Prognose für den nächstfolgenden Messzyklus eingesetzt. Da das Rauschen sich mit großer Wahrscheinlichkeit nicht innerhalb der Messzyklusdauer von etwa 40 ms erheblich ändert, ist eine so erstellte Prognose ausreichend gut. Eine solche Prognose kann sogar aus einer Mittelung über mehrere Messzyklen entstehen.

Erfindungsgemäß wird also innerhalb eines "ersten" Messzyklus ein Zeitintervall definiert und innerhalb des Zeitintervalls wird zu definierten Zeitpunkten die Höhe des am Signaleingang anliegenden Signals registriert. Als erster Messzyklus wird dabei ein solcher verstanden, dem weitere Messzyklen folgen. Zudem werden innerhalb des Zeitintervalls eine Einhüllende bezüglich der am Signaleingang anliegenden Messwerte und deren zeitliche Ableitung gebildet. Dabei liegt der Sinn der Einhüllenden darin, den Rauschlevel zu mitteln und das Echosignal zu glätten. Nun wird an den vorher definierten Zeitpunkten die Größe der zeitlichen Ableitung registriert. Diese ist beim gemittelten Rauschlevel normalerweise gleich Null, während das Signal mit einer starken zeitlichen Änderung einher geht. Zu jedem der Zeitpunkte liegen also das gemessene Signal, das aus dem Rauschen oder dem Echosignal stammen kann, und die Ableitung der Einhüllenden vor. Nachfolgend werden diejenigen Messwerte der Signalhöhe ermittelt, bei denen die zeitliche Ableitung der Einhüllenden gleich Null oder zumindest nahezu gleich Null ist. Von diesen ist sicher, dass sie aus dem Rauschuntergrund stammen. Diese können dann zur Ermittelung des Schwellwertes genutzt werden. Aus den Störpegelproben wird der Rauschlevel beispielsweise durch Mittelwertbildung und Einbeziehung der Standardabweichung ermittelt.

Mit anderen Worten liegen die Kerngedanken also darin, den Rauschlevel während eines Messzyklus durch Vergleich unterschiedlicher Störpegelproben, die beispielsweise am Anfang und Ende des Messintervalls liegen, zu ermitteln, wobei sicherzustellen ist, dass es sich auch tatsächlich um eine Störpegelprobe handelt. Dazu wird die Einhüllende beispielsweise durch Demodulation, und deren zeitliche Ableitung gebildet, um das Nutzsignal von Rauschen zu trennen. Darauf folgt die Berechnung des Rauschpegels für den Messzyklus aus den unterschiedlichen Störpegelproben. Der ermittelte Rauschlevel kann am Ende jedes Messintervalls als codierte Bitsequenz zur Auswerteeinheit übertragen werden, wobei eine Mittelung des Rauschverhaltens am Auswerteeinheit aus den Rauschpegeln mehrerer Messzyklen möglich ist.

Als Ergebnis der erfindungsgemäßen Vorgehensweise ergibt sich ein Schwellwert, der im Idealfall oberhalb des "kontinuierlichen" Anteiles des Rauschuntergrundes und unterhalb kurzzeitiger hochfrequenter Spitzen liegt. Bei der späteren Signalauswertung können diese hochfrequenten Spitzen mittels Filterelektronik herausgefiltert werden.

Da der Schwellwert für den Komparator im Sensor mit der erfindungsgemäßen Vorgehensweise so nah wie möglich an die Rauschgrenze gelegt werden kann, ist es möglich, mit der Puls-Echo Messung eine möglichst hohe Reichweite zu erzielen. Zudem ist es von Vorteil, dass mit der erfindungsgemäßen Vorgehensweise die gleichzeitige Messung von Rauschen und Objekten mit demselben Sensor für jeden Messzyklus möglich ist. Zudem kann der Schwellwert und damit die Empfindlichkeit der Messung im direkten Zusammenhang mit einer Ultraschallmessung in Echtzeit und selbstständig vom Sensor eingestellt werden. Durch Anpassung der Schwelle und Filtern der Störungen ist eine sichere Zuordnung der Nutzsignale zu einem relevanten Objekt möglich, so dass die Zuverlässigkeit des Systems erheblich erhöht ist.

Um unnötigen Rechenaufwand zu vermeiden, ist es vorteilhaft, das Zeitintervall nicht über die gesamte Länge des Messzyklus sondern über eine geringere zeitliche Länge zu definieren. Dadurch können "uninteressante" zeitliche Bereiche, wie beispielsweise der des abklingenden Sendepulses, ausgeblendet werden, die nicht für die Bestimmung des Schwellwertes taugen. Wird nun ein insbesondere verhältnismäßig kurzes Zeitintervall am Beginn des Messzyklus, insbesondere vor den zu erwartenden Echosignalen, definiert und daraus der Schwellwert bestimmt, so kann dieser noch für die restliche Dauer des aktuellen Messzyklus genutzt werden.

Mit dem erfindungsgemäßen Verfahren ist es jedoch auch unproblematisch, die Länge des Zeitintervalls über zumindest nahezu die Länge des gesamten Messzyklus zu definieren. Schließlich werden die Echosignale anhand der Ableitung der Einhüllenden ausgeblendet. Der im ersten Messzyklus berechnete Schwellwert wird dann als Schwellwert für den oder die nachfolgenden Messzyklen gewissermaßen als Prognose genutzt. Dabei können Prognosen für Schwellwerte auch als Mittelung über mehrere Messzyklen entstehen. In einer dynamischen Umgebung ändert sich der Rauschpegel jedoch kontinuierlich, so dass es vorteilhaft ist, für jeden Messzyklus die Rauschgrenze neu zu bestimmen, um gegebenenfalls den Schwellwert im Komparator zu aktualisieren.

### Kurze Beschreibung der Zeichnungen

In den Zeichnungen wird das erfindungsgemäße Verfahren dargestellt und unter Angabe weiterer Einzelheiten nachfolgend näher beschrieben. Es zeigen:
- Figur 1: einen kompletten Messzyklus,
- Figur 2: eine Einhüllende und
- Figur 3: die Ableitung einer Einhüllenden,

### Ausführungsformen der Erfindung

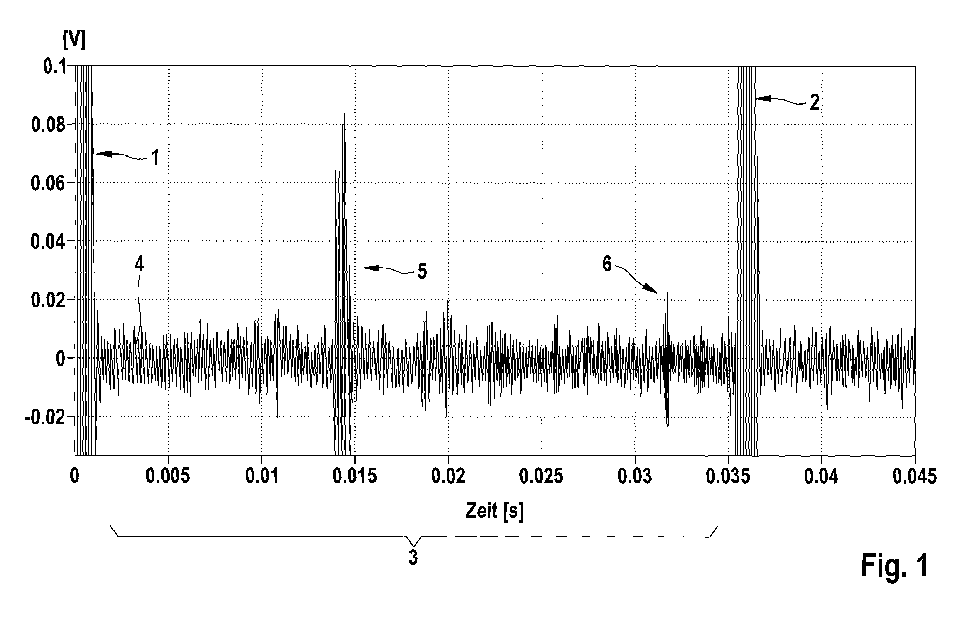

In Figur 1 ist ein kompletter erster Messzyklus gezeigt, das mit einem Sendepuls 1 beginnt und bis zu einem weiteren Sendepuls 2 reicht. Innerhalb des Messzyklus wird ein Zeitintervall 3 definiert. Dabei ist in dem Diagramm eine Spannung in Volt gegen die Zeit in Sekunden aufgetragen. Innerhalb des Zeitintervalls 3 ist ein Rauschen 4 um den Spannungsnullpunkt herum zu beobachten, wobei der Rauschlevel bis auf einzelne sichtbare Spitzen unter 0,01 Volt liegt. In dem Zeitintervall 3 sind neben dem Rauschen auch noch mehr oder weniger offensichtliche Signale 5 und 6, die auf ein Echo zurückzuführen sein können, zu erkennen. Diese gilt es als Echo zu erkennen, wobei dazu zunächst der Rauschlevel festzulegen ist.

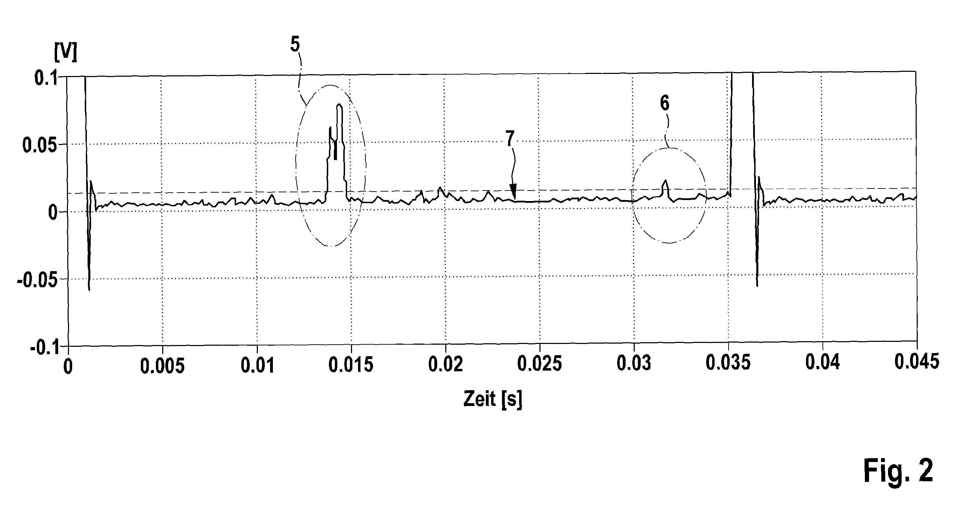

Dafür wird, wie in Figur 2 gezeigt, durch Demodulation die Einhüllende 7 des am Detektoreingang anliegenden Signals berechnet. Diese Amplituden-Demodulation kann beispielsweise mittels I/Q Demodulation, Tiefpassfilterung, oder ähnlichem realisiert werden. Nach der Demodulation erscheinen die beiden Signale 5 und 6 deutlicher. Es scheint sich somit offensichtlich um zu detektierende Objekte zu handeln.

An dem Signal nach Figur 1 werden mehrere Störpegelproben entnommen. Dafür bietet sich der Anfang des Zeitintervalls 3 an, da in diesem Bereich die reflektieren Echos eine sehr hohe Amplitude von größer 200 mV haben. Solche Echos können besonders einfach als Nutzsignal identifiziert werden, wobei eine kleinere Amplitude meistens dem Rauschen zuzurechnen ist. Zusätzlich werden noch Störpegelproben im hinteren Bereich des Messintervalls entnommen. Die an den Störpegelproben gemessenen Werte werden in Verbindung mit den definierten Zeitpunkten, zu denen sie aufgenommen wurden, gespeichert.

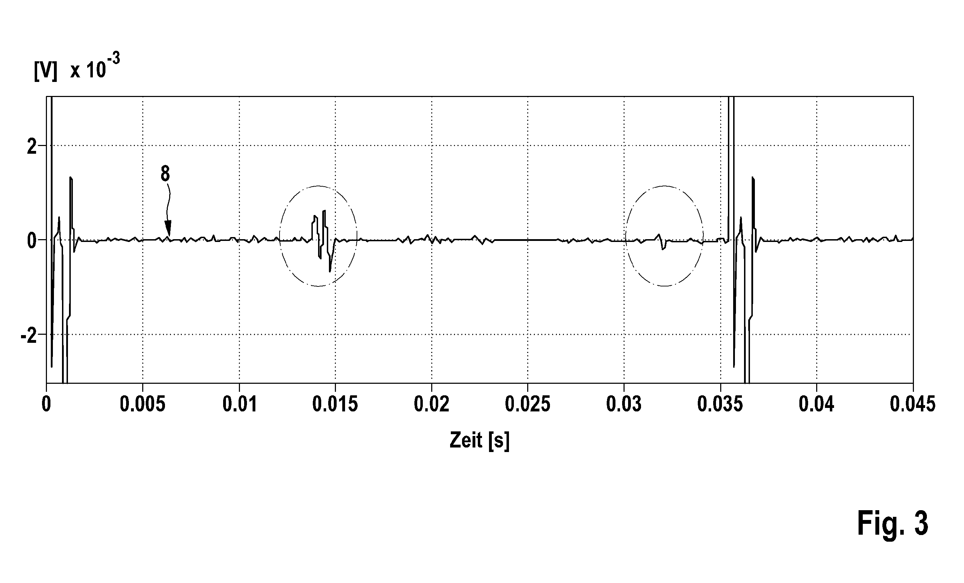

Die zeitliche Ableitung 8 der Einhüllenden 7 wird ebenfalls berechnet (Figur 3). Da das Rauschen in dem Messintervall einen annähernd konstanten Mittelwert aufweist, ist die Einhüllende nahezu konstant und die zeitliche Ableitung entsprechend nahezu Null. Die Änderungen der Signalamplitude, die von reflektieren Echos 6 und 7 stammen, bleiben auch in der zeitlichen Ableitung gut sichtbar. Anhand der zeitlichen Ableitung wird vermieden, dass Störpegelproben während eines Nutzsignals entnommen werden. Dazu werden diejenigen Messwerte der Signalhöhe ermittelt, bei denen die zeitliche Ableitung der Einhüllenden gleich Null oder zumindest nahezu gleich Null ist, also zumindest kleiner als ein vorgegebener Grenzwert ist. Eine entnommene "Störpegelprobe", bei der die zeitliche Ableitung nämlich stark von Null unterschiedlich ist, wird als Echo erkannt.

Anhand der aus dem Rauschlevel entnommenen Störpegelproben wird der Rauschlevel ermittelt. Dieser kann beispielsweise durch Mittelwertbildung und Einbeziehung der Standardabweichung berechnet werden. Der errechnete Rauschlevel bestimmt dann den Schwellwert 9 für den Komparator. Der digitale Ausgang vom Komparator wird über eine Signalleitung vom Sensor zum Auswerteeinheit übertragen.

Für die Überwachung und Verarbeitung in der Auswerteeinheit ist es hilfreich, das Rauschverhalten vom Sensor über das gesamte Zeitintervall zu registrieren. So kann der errechnete Rauschlevel im Sensor nach jedem Messzyklus übertragen werden. Dieser wird vorteilhafterweise nach jedem Messzyklus und vor dem nächsten Sendeintervall als Bitfolge gesendet. Eine Bitfolge von 5 Bits ermöglicht bereits die Codierung von 31 Pegelhöhen und einem Fehlerzustand.

## Patentansprüche

1. Verfahren zur dynamischen Anpassung eines Schwellwertes (9) am Signaleingang einer Detektionseinrichtung, insbesondere eines Sensors zur Abstandsmessung mittels eines Echoverfahrens, wobei innerhalb eines Messzyklus ein Sendesignal (1) von einem Objekt reflektiert und in Form eines Echosignals (5,6) zur Detektionseinrichtung gesandt wird, wobei der zeitliche Abstand zwischen dem Senden des Sendesignals (1) und dem Empfang des Echosignals (5,6) gemessen und daraus der Abstand zum Objekt bestimmt wird, wobei ein Schwellwert (9) für einen Empfang des Echosignals in Abhängigkeit von Messungen am Rauschuntergrund angepasst wird,
**dadurch gekennzeichnet,**
**dass** innerhalb eines ersten Messzyklus ein Zeitintervall (3) definiert wird, dass zu definierten Zeitpunkten innerhalb des Zeitintervalls (3) die Höhe der jeweils am Signaleingang anliegenden Signale registriert wird,
**dass** innerhalb des Zeitintervalls (3) eine Einhüllende (7) bezüglich der am Signaleingang anliegenden Messwerte und deren zeitliche Ableitung (8) gebildet werden,
**dass** die Höhe der zeitlichen Ableitung (8) an den definierten Zeitpunkten registriert wird,
**dass** diejenigen Messwerte der Signalhöhe ermittelt werden, bei denen die zeitliche Ableitung der Einhüllenden (8) null ist oder zumindest einen vorgegebenen Grenzwert unterschreitet und
**dass** aus diesen Messwerten ein Schwellwert (9) berechnet wird.

2. Verfahren nach Anspruch 1,
**dadurch gekennzeichnet,**
**dass** die Länge des Zeitintervalls (3) geringer als die des Messzyklus definiert wird.

3. Verfahren nach Anspruch 2,
**dadurch gekennzeichnet,**
**dass** ein Zeitintervall (3) am Beginn des Messzyklus, insbesondere vor den zu erwartenden Echos (5,6), definiert wird.

4. Verfahren nach Anspruch 3,
**dadurch gekennzeichnet,**
**dass** der zu Beginn des Messzyklus ermittelte Schwellwert (9) für die restliche Dauer des Messzyklus genutzt wird.

5. Verfahren nach Anspruch 1,
**dadurch gekennzeichnet,**
**dass** die Länge des Zeitintervalls (3) über zumindest nahezu die gesamte Länge des Messzyklus definiert wird.

6. Verfahren nach einem der vorherigen Ansprüche,
**dadurch gekennzeichnet,**
**dass** der im ersten Messzyklus berechnete Schwellwert (9) als Schwellwert für einen nachfolgenden Messzyklus genutzt wird.

7. Verfahren nach einem der vorherigen Ansprüche,
**dadurch gekennzeichnet,**
**dass** ein Schwellwert (9) als Mittelwert der Schwellwerte mehrerer Messzyklen ermittelt wird.

8. Ultraschallsensor als Teil einer Einparkhilfe in einem Fahrzeug mit einem Schallwandler und einer Schaltungsanordnung zur Umsetzung des Verfahrens nach einem der vorherigen Ansprüche.
